# EUROPÄISCHE PATENTSCHRIFT

(11) **EP 3 816 609 B1**
(45) Veröffentlichungstag und Bekanntmachung des Hinweises auf die Patenterteilung: **12.01.2022**
(21) Anmeldenummer: 19206943.3
(22) Anmeldetag: 04.11.2019
(51) Int. Cl.: G01N 21/3504, G01N 21/39, G01S 17/88

(54) **VORRICHTUNG UND VERFAHREN ZUR FERNDETEKTION EINES ZIELGASES**
METHOD AND DEVICE FOR REMOTE DETECTION OF A TARGET GAS
DISPOSITIF ET PROCÉDÉ DE DÉTECTION À DISTANCE D'UN GAZ CIBLE

(43) Veröffentlichungstag der Anmeldung: 05.05.2021
(73) Patentinhaber: Fraunhofer-Gesellschaft zur Förderung der angewandten Forschung e.V., 80686 München (DE)
(72) Erfinder: Herbst, Johannes, 79110 Freiburg (DE); Lambrecht, Armin, 79110 Freiburg (DE); Strahl, Thomas, 79110 Freiburg (DE); Maier, Eric, 79110 Freiburg (DE); Rademacher, Sven, 79110 Freiburg (DE)
(74) Vertreter: WSL Patentanwälte Partnerschaft mbB

(56) Entgegenhaltungen:
- DE-A1-102013 101 610
- GB-A- 2 274 163
- GB-A- 2 449 343
- FRISH M B ET AL: "Standoff and Miniature Chemical Vapor Detectors Based on Tunable Diode Laser Absorption Spectroscopy", IEEE SENSORS JOURNAL, IEEE SERVICE CENTER, NEW YORK, NY, US, Bd. 10, Nr. 3, 1. März 2010 (2010-03-01), Seiten 639-646, XP011289996, ISSN: 1530-437X, DOI: 10.1109/JSEN.2009.2038536

## Beschreibung

Die vorliegende Erfindung betrifft eine Vorrichtung zur Ferndetektion eines Zielgases aufweisend eine Beleuchtungseinrichtung mit einem Laser, wobei der Laser derart eingerichtet ist, dass der Laser in einem Betrieb der Vorrichtung einen monomodigen Anregungslaserstrahl mit einer Wellenlänge emittiert, eine Modulationseinrichtung, eine Detektionseinrichtung mit einem ersten Detektor, die derart eingerichtet ist, dass in dem Betrieb der Vorrichtung der Anregungslaserstrahl von der Detektionseinrichtung erfasst wird, und eine Auswerteeinrichtung, wobei die Modulationseinrichtung und der Laser derart eingerichtet und angeordnet sind, dass in dem Betrieb der Vorrichtung die Wellenlänge des Anregungslaserstrahls mit einer ersten Modulationsfrequenz moduliert ist, wobei die Beleuchtungseinrichtung und die Detektionseinrichtung derart angeordnet sind, dass in dem Betrieb der Vorrichtung der Anregungslaserstrahl von einem Abstrahlpunkt auf ein Objekt abstrahlbar ist und der von dem Objekt reflektierte und/oder gestreute Anregungslaserstrahl von der Detektionseinrichtung erfassbar ist, wobei die Detektionseinrichtung und die Auswerteeinrichtung derart wirksam miteinander verbunden sind, dass in dem Betrieb der Vorrichtung ein den erfassten Anregungslaserstrahl repräsentierendes Signal von der Detektionseinrichtung an die Auswerteeinrichtung übergeben wird, und wobei die Auswerteeinrichtung derart eingerichtet ist, dass in dem Betrieb der Vorrichtung die Auswerteeinrichtung das von der Detektionseinrichtung übergebene Signal auswertet, wobei aus einer Abschwächung des Anregungslaserstrahls die mittlere Säulendichte des Zielgases in einem von dem Anregungslaserstrahl durchstrahlten Volumen bestimmt wird.

Die vorliegende Erfindung betrifft darüber hinaus ein Verfahren zur Ferndetektion eines Zielgases mit den Schritten: Erzeugen eines monomodigen Anregungslaserstrahls mit einer Wellenlänge mit einem Laser, Modulieren der Wellenlänge des Anregungslaserstrahls mit einer ersten Modulationsfrequenz, Beleuchten eines Objekts mit dem modulierten Anregungslaserstrahl, wobei der Anregungslaserstrahl einen Pfad von einem Abstrahlpunkt zu dem Objekt zurücklegt, Erfassen des von dem Objekt reflektierten und/ oder gestreuten Anregungslaserstrahls, Bestimmen der mittleren Säulendichte des Zielgases in einem von dem Anregungslaserstrahl durchstrahlten Volumen aus einer Abschwächung des an dem Objekt reflektierten und/ oder gestreuten Anregungslaserstrahls.

Ziel der Ferndetektion eines Zielgases ist es, ein bestimmtes Gas in einer definierten Umgebung bzw. an einer definierten Stelle, z.B. in der Umgebung einer Gaspipeline, quantitativ zu erfassen. So können beispielsweise Lecks an einer Gaspipeline aus der Ferne detektiert werden, ohne dass der Anwender der Gefahr schädlicher Gase ausgesetzt wird.

Aus dem Stand der Technik sind hierzu Verfahren und Vorrichtungen bekannt, die sich der Laserspektroskopie insbesondere mit Wellenlängen im nahen und mittleren Infrarotbereich bedienen. Dabei durchstrahlt ein Laserstrahl mit einer bestimmten Wellenlänge ein Volumen mit dem zu erfassenden Gas. Abhängig von der jeweiligen Gassorte werden von der Laserstrahlung verschiedene Molekülschwingungen und Rotationsübergänge in den Gasen angeregt, so dass die Strahlung abhängig von der Gassorte absorbiert wird. Insbesondere im Infrarotbereich zeigen viele Gase charakteristische Absorptionseigenschaften, die gut für eine Unterscheidung herangezogen werden können.

Um die Laserstrahlung, welche mit den Gasen in Wechselwirkung stand, erfassen zu können, wird häufig eine Reflexionsgeometrie verwendet. D.h. der Laserstrahl wird an einer Oberfläche, beispielsweise der Wand einer Gaspipeline, wieder in Richtung des Abstrahlpunktes reflektiert und durch eine entsprechende Detektionseinrichtung, die sensitiv für die emittierte Wellenlänge des Laserstrahls ist, erfasst. Somit wird anhand der erfassten Abschwächung der Laserstrahlung auf die Gassorte geschlossen.

Bei Anwendungen ist in der Praxis, beispielsweise bei der Leckdetektion an gasführenden Objekten, jedoch häufig bereits bekannt, um welche Gassorte es sich bei dem potentiell austretenden Zielgas handelt. Zusätzlich zu der Gassorte ist es daher von besonderer Bedeutung, die Gaskonzentration quantitativ anhand der Signalabschwächung zu bestimmen.

Erfolgt die Messung ohne Kenntnis der Entfernung zwischen dem Abstrahlpunkt des Messgerätes und dem Punkt, an welchem die Strahlung reflektiert wurde, ist es nur möglich die sogenannte Säulendichte des Zielgases, d.h. eine über die Entfernung integrierte Gasmenge zu bestimmen, die häufig in der Einheit ppm*m angegeben wird.

Ist die Entfernung hingegen bekannt, kann aus der Säulendichte die mittlere Gaskonzentration in ppm bestimmt werden. Für die Feststellung der Entfernung sind aus dem Stand der Technik Verfahren bekannt, welche die Entfernung entweder schätzen oder aber ein separates Gerät zum überschlägigen Messen der Entfernung verwenden.

So beschreibt Frish et. al. in IEEE Sensors Journal, vol. 10, No. 3, 2010 eine Vorrichtung zur Detektion von Gasen basierend auf der Absorptionsspektroskopie mittels durchstimmbarer Laser, wobei zusätzlich zur spektroskopischen Messung die Entfernung zum Messobjekt berücksichtigt wird.

Die damit verbundenen Ungenauigkeiten bei der Bestimmung der Entfernung führen allerdings zu massiven Problemen bei der Leckdetektion an gasführenden Objekten. Insofern ist eine exakte Entfernungsmessung für eine exakte Bestimmung der Gaskonzentration unerlässlich. Insbesondere ist sicherzustellen, dass die gemessene Entfernung mit der Absorptionsstrecke für die Bestimmung der Säulendichte übereinstimmt.

Zudem sind in der Umgebung natürlicherweise Mengen des Zielgases vorhanden, die das Messergebnis verfälschen können.

Der vorliegenden Erfindung liegt daher die Aufgabe zugrunde, eine Vorrichtung und ein Verfahren zur Ferndetektion eines Zielgases bereitzustellen, die eine genauere Konzentrationsmessung des Zielgases ermöglicht.

Die zuvor genannte Aufgabe wird erfindungsgemäß durch eine Vorrichtung zur Ferndetektion eines Zielgases gelöst, die eine Beleuchtungseinrichtung mit einem Laser aufweist, wobei der Laser derart eingerichtet ist, dass der Laser in einem Betrieb der Vorrichtung einen monomodigen Anregungslaserstrahl mit einer Wellenlänge emittiert, die Vorrichtung weiterhin eine Modulationseinrichtung aufweist sowie eine Detektionseinrichtung mit einem ersten Detektor, die derart eingerichtet ist, dass in dem Betrieb der Vorrichtung der Anregungslaserstrahl von der Detektionseinrichtung erfasst wird, und die Vorrichtung weiterhin eine Auswerteeinrichtung aufweist, wobei die Modulationseinrichtung und der Laser derart eingerichtet und angeordnet sind, dass in dem Betrieb der Vorrichtung die Wellenlänge des Anregungslaserstrahls mit einer ersten Modulationsfrequenz moduliert ist, wobei die Beleuchtungseinrichtung und die Detektionseinrichtung derart angeordnet sind, dass in dem Betrieb der Vorrichtung der Anregungslaserstrahl von einem Abstrahlpunkt auf ein Objekt abstrahlbar ist und der von dem Objekt reflektierte und/oder gestreute Anregungslaserstrahl von der Detektionseinrichtung erfassbar ist, wobei die Detektionseinrichtung und die Auswerteeinrichtung derart wirksam miteinander verbunden sind, dass in dem Betrieb der Vorrichtung ein den erfassten Anregungslaserstrahl repräsentierendes Signal von der Detektionseinrichtung an die Auswerteeinrichtung übergeben wird, und wobei die Auswerteeinrichtung derart eingerichtet ist, dass in dem Betrieb der Vorrichtung die Auswerteeinrichtung das von der Detektionseinrichtung übergebene Signal auswertet, wobei aus einer Abschwächung des Anregungslaserstrahls die mittlere Säulendichte des Zielgases in einem von dem Anregungslaserstrahl durchstrahlten Volumen bestimmt wird, wobei die Beleuchtungseinrichtung derart eingerichtet und angeordnet ist, dass in dem Betrieb der Vorrichtung die Beleuchtungseinrichtung einen Entfernungsmessstrahl mit einer Wellenlänge abstrahlt, wobei der Laser zu der Generation des Entfernungsmessstrahls beiträgt, die Beleuchtungseinrichtung derart eingerichtet und angeordnet ist, dass in dem Betrieb der Vorrichtung der Entfernungsmessstrahl auf dem gleichen optischen Weg von dem Abstrahlpunkt auf das Objekt abstrahlbar ist wie der Anregungslaserstrahl, die Modulationseinrichtung und die Beleuchtungseinrichtung derart eingerichtet sind, dass in dem Betrieb der Vorrichtung die Amplitude oder die Wellenlänge des Entfernungsmessstrahls mit einer zweiten Modulations frequenz moduliert ist, wobei die zweite Modulationsfrequenz verschieden ist von der ersten Modulationsfrequenz, die Modulationseinrichtung derart wirksam mit der Auswerteeinrichtung verbunden ist, dass in dem Betrieb der Vorrichtung von der Modulationseinrichtung ein Signal an die Auswerteeinrichtung übergeben wird, wobei das Signal die Modulationsfrequenz repräsentiert, die Detektionseinrichtung derart eingerichtet und angeordnet ist, dass in dem Betrieb der Vorrichtung der an dem Objekt reflektierte und/oder gestreute Entfernungsmessstrahl von der Detektionseinrichtung erfassbar ist, die Detektionseinrichtung derart wirksam mit der Auswerteeinrichtung verbunden ist, dass in dem Betrieb der Vorrichtung ein den erfassten Entfernungsmessstrahl repräsentierendes Signal an die Auswerteeinrichtung übergeben wird, und die Auswerteeinrichtung derart eingerichtet ist, dass in dem Betrieb der Vorrichtung die Auswerteeinrichtung aus dem übergebenen Signal die räumliche Entfernung zwischen der Vorrichtung und dem Objekt bestimmt, wobei die räumliche Entfernung mittels einer Phasenmessung oder einer FMCW-Abstandsmessung bestimmt wird, und wobei aus der mittleren Säulendichte des Zielgases und der räumlichen Entfernung die mittlere Gaskonzentration des Zielgases bestimmt wird.

Erfindungsgemäß umfasst die Vorrichtung zur Detektion eines Zielgases, wie beispielsweise eines infrarotaktiven Erdgases wie Methan, eine Beleuchtungseinrichtung mit einem Laser, der einen monomodigen, kontinuierlichen Anregungslaserstrahl mit einer Wellenlänge, beispielsweise im Infrarotbereich, emittiert. Die Beleuchtungseinrichtung ist dabei so angeordnet, dass der Anregungslaserstrahl von einem Abstrahlpunkt auf ein Objekt abstrahlbar ist, an welchem beispielsweise ein Leck vermutet wird. Der Anregungslaserstrahl trifft auf das Objekt, welches untersucht werden soll (z.B. eine Gaspipeline) und wird an dem Objekt reflektiert und/oder gestreut.

Die erfindungsgemäße Vorrichtung weist weiterhin eine Detektionseinrichtung mit einem ersten Detektor auf, die so eingerichtet ist, dass der Anregungslaserstrahl, der an der Objektoberfläche reflektiert und/oder gestreut wurde von dem Detektor der Detektionseinrichtung erfasst wird. Bei der Detektion von Strahlung im Infrarotbereich kommen insbesondere thermische Detektoren wie Bolometer oder Fotodetektoren zum Einsatz. Der Vorteil der Fotodetektoren besteht in einer deutlich höheren Empfindlichkeit im Vergleich zu thermischen Detektoren, der detektierbare Spektralbereich ist jedoch eingeschränkter. Da jede Gassorte Absorptionscharakteristika bei anderen Wellenlängen zeigt, ist der Detektor vorzugsweise an die jeweils zu detektierende Gassorte anzupassen.

Der Anregungslaserstrahl erfährt auf seinem Weg von dem Abstrahlpunkt zum Objekt hin und auf dem Weg zurück zum Detektor eine von der Gassorte abhängige Abschwächung, da je nach Wellenlänge des Anregungslaserstrahls verschiedene Molekülschwingungen und/oder Rotationsübergänge in dem Gas angeregt werden.

Um aus der Abschwächung des Anregungslaserstrahls die mittlere Säulendichte des Zielgases zu bestimmen, weist die erfindungsgemäße Vorrichtung weiterhin eine Auswerteeinrichtung auf, wobei die Detektionseinrichtung und die Auswerteeinrichtung derart wirksam miteinander verbunden sind, dass von der Detektionseinrichtung ein den erfassten Anregungslaserstrahl repräsentierendes Signal an die Auswerteeinrichtung übergeben wird.

Die mittlere Säulendichte ist die auf 1 m normierte Gaskonzentration, die aus dem Transmissionsspektrum über die Gesamtstrecke des Anregungslaserstrahls ermittelt wird. Der Anregungslaserstrahl durchquert hierbei eine unbekannte Streckenlänge durch eine potentielle Zielgaswolke mit erhöhter Gaskonzentration und außerhalb der Wolke eine unbekannte Strecke mit der Umgebungskonzentration. Wenn die Entfernung und damit die gesamte Streckenlänge des Anregungslaserstrahls bekannt ist, kann aus der mittleren Säulendichte die mittlere Gaskonzentration berechnet werden.

Um die Entfernung zwischen Vorrichtung und Objekt genau zu bestimmen, ist die Beleuchtungseinrichtung der Vorrichtung weiterhin derart eingerichtet, dass ein Entfernungsmessstrahl mit einer Wellenlänge abgestrahlt wird, wobei der Laser zu der Generation des Entfernungsmessstrahls beiträgt. Dass der Laser zur Generation des Entfernungsmessstrahls beiträgt, bedeutet im Sinne der vorliegenden Erfindung, dass der Laser die Erzeugung des Entfernungsmessstrahls unmittelbar, d.h. durch Emission der Entfernungsmessstrahls selbst, oder mittelbar, beispielsweise durch Frequenzverdopplung in einem nicht-linearen optischen Kristall, bewirkt.

Ein Vorteil einer solchen Entfernungsmessung besteht darin, dass die Entfernungsmessung zwingend am gleichen Ort und insbesondere auch entlang der gleichen Strecke wie die spektroskopische Messung erfolgt. Damit wird automatisch sichergestellt, dass die gemessene Entfernung der Absorptionsstrecke entspricht.

Der Entfernungsmessstrahl wird in einer Ausführungsform auf dem gleichen optischen Pfad zum Objekt abgestrahlt wie der Anregungslaserstrahl.

Der Abstrahlpunkt im Sinne der vorliegenden Erfindung ist in einer Ausführungsform derjenige Punkt, an welchem Anregungslaserstrahl und Entfernungsmessstrahl erstmals auf einem gemeinsamen optischen Pfad verlaufen. Es ist aber in einer Ausführungsform auch möglich, dass der Punkt, an welchem der Anregungslaserstrahl und dem Entfernungsmesslaserstrahl aus einem Gehäuse der Vorrichtung austreten, als Abstrahlpunkt definiert wird, da innerhalb des Gehäuses die Gaskonzentration zweckmäßigerweise so gering wie möglich gehalten wird. Somit trägt der Verlauf der Strahlung im Gehäuse nicht zur Messung der mittleren Säulendichte bzw. mitteleren Gaskonzentration bei und die dort von der Strahlung zurückgelegte Strecke ist nicht relevant. In einer Ausführungsform ist der Abstrahlpunkt der Punkt ab dem die Anregungslaserstrahlung erstmals eine Abschwächung aufgrund der Absorption in einem Gas erfahren kann. Die mittlere Gaskonzentration und mittlere Säulendichte werden mit der erfindungsgemäßen Vorrichtung grundsätzlich zwischen dem Abstrahlpunkt und dem Reflexionspunkt am Objekt bestimmt.

Die Entfernungsmessung erfolgt erfindungsgemäß mittels einer Phasenmessung oder einer FMCW-Abstandsmessung. Dies bietet unter anderem den Vorteil, dass kontinuierliche (CW) elektromagnetische Strahlung als Entfernungsmessstrahl verwendet werden kann, sodass zumindest in Ausführungsformen der erfindungsgemäßen Vorrichtung der Anregungslaserstrahl auch gleichzeitig als Entfernungsmessstrahl dient.

Bei der Entfernungsmessung auf Basis einer Phasenmessung wird ausgenutzt, dass die Phasenlage der Amplitudenmodulation des Entfernungsmessstrahls nach dem Durchlaufen des Wegs von der Beleuchtungseinrichtung zu dem Objekt und zurück von dem Objekt zu dem Detektor von der zurückgelegten Wegstrecke abhängt. Gemessen werden kann die Phasenlage im Vergleich zu einem Referenzsignal, welches unmittelbar von der Modulationseinrichtung ohne Durchlaufen des Wegs von der Beleuchtungseinrichtung zu dem Objekt und zurück an die Auswerteeinrichtung übertragen wird.

Bei einer FMCW (engl.: frequency-modulated continuous wave) -Abstandsmessung wird die Wellenlänge bzw. Frequenz des Entfernungsmessstrahls zeitlich linear verändert. Dabei wird die lineare Änderung der Wellenlänge bzw. Frequenz zeitlich periodisch wiederholt. Somit kodiert jede Wellenlänge bzw. Frequenz des Entfernungsmessstrahls einen bestimmten Zeitwert bei der Abstrahlung aus der Beleuchtungseinrichtung.

Zur Modulation der Wellenlänge bzw. Frequenz des Entfernungsmessstrahls kommen insbesondere Sägezahn- oder Dreiecksfunktionen zum Einsatz. Auf diese Weise gibt es zu jedem Zeitpunkt eine Frequenz oder Wellenlängendifferenz zwischen dem zu diesem Zeitpunkt auf dem Detektor auftreffenden Entfernungsmessstrahl und einem auf direktem Weg an die Auswerteeinrichtung übertragenen, die Frequenzmodulation repräsentierenden Referenzsignal. Diese Frequenzdifferenz ist ein direktes Maß für die Entfernung, welche der Entfernungsmessstrahl zurückgelegt hat.

In einer Ausführungsform wird durch Mischen des Referenzsignals der Modulation mit dem am Objekt reflektierten und/oder gestreuten und detektierten Entfernungsmessstrahl die Wellenlängen- bzw. Frequenzverschiebung und damit die Zeitverschiebung bestimmt. Aufgrund der bekannten zeitlichen Kodierung der Wellenlängen bzw. Frequenzen des ausgesendeten Entfernungsmessstrahls wird somit die Laufzeit des Entfernungsmessstrahls zwischen Abstrahlpunkt und Objekt ermittelt. Die Laufzeit wiederum ist proportional zu der räumlichen Entfernung. Für eine präzise Abstandsmessung ist eine möglichst lineare Modulation der Sendefrequenz erforderlich, da jede Nichtlinearität die Abstandsgenauigkeit der Entfernungsmessung verschlechtert.

Die Modulation der Wellenlänge kann entweder zusätzlich zu der Amplitudenmodulation mit der zweiten Modulationsfrequenz erfolgen, die in diesem Fall lediglich der Unterscheidung von dem Anregungslaserstrahl dient, oder die Amplitudenmodulation ersetzen, sodass die Wellenlängenmodulation einerseits zur Entfernungsmessung dient und andererseits zur Unterscheidung von dem Anregungslaserstrahl.

Der Vorteil der beiden Entfernungsmessverfahren besteht weiterhin darin, dass eine deutlich höhere Auflösung im Vergleich zu Pulslaufzeitverfahren erzielt wird, wobei gleichzeitig ein deutlich geringerer messtechnischer Aufwand zu betreiben ist. Übliche Messentfernungen, bei welchen die vorliegende Erfindung eingesetzt werden soll, liegen zwischen 1 m und 50 m.

Die Detektionseinrichtung der Vorrichtung ist zu diesem Zweck derart eingerichtet, dass auch der am Objekt reflektierte und/oder gestreute Entfernungsmessstrahl erfassbar ist und ein den erfassten Entfernungsmessstrahl repräsentierendes Signal an die Auswerteeinrichtung, der ebenfalls die Modulationsfrequenz des ausgesendeten Entfernungsmessstrahls vorliegt, übergeben wird. Bei der Wahl des Detektors oder der Detektoren muss darauf geachtet werden, dass sowohl die Absorptionscharakteristika der zu detektierenden Gassorte noch mit einem ausreichenden Signal-zu-Rausch-Verhältnis detektiert werden können als auch der am Objekt reflektierte Entfernungsmessstrahl.

Um die Signale des Anregungslaserstrahls und des Entfernungsmessstrahls voneinander trennen zu können, wird die Wellenlänge des Anregungslaserstrahls mit einer ersten Modulationsfrequenz und die Amplitude oder die Wellenlänge des Entfernungsmessstrahls mit einer zweiten Modulationsfrequenz moduliert. Dies kann beispielsweise durch eine Modulation des Diodenstroms erfolgen, sofern ein Diodenlaser als Laser der Beleuchtungseinrichtung verwendet wird. Um optische und elektronische Wechselwirkungen zwischen der Entfernungsmessung und der Gasspektroskopie auszuschließen, ist auch ein getakteter Betrieb der Vorrichtung möglich.

Da die Modulationsfrequenzen als Referenzen von der Modulationseinrichtung an die Auswerteinrichtung übermittelt werden, wird so durch die Auswerteeinrichtung der Vorrichtung aus dem von dem Detektor übergebenen Signal sowohl die räumliche Entfernung zum Objekt als auch die Säulendichte des Zielgases bestimmt. Aus der Säulendichte des Zielgases und der räumlichen Entfernung zum Messobjekt lässt sich die mittlere Gaskonzentration des Zielgases berechnen.

Durch die simultane Entfernungsmessung ist zudem eine Korrektur der gemessenen mittleren Gaskonzentration durch die Subtraktion einer mittleren Hintergrundgaskonzentration in der Luft zwischen Vorrichtung und Objekt möglich, sofern Kennwerte für übliche Gaskonzentrationen in der Luft vorliegen. So erfolgt die Gaskonzentrationsbestimmung mit einer höheren Genauigkeit und Empfindlichkeit. Die Kennwerte sind auch direkt mit der erfindungsgemäßen Vorrichtung bestimmbar, indem die mittlere Gaskonzentration auf einer bekannten Strecke zwischen dem Messgerät und einer Objektoberfläche, die kein Leck aufweist vermessen wird.

Die erfindungsgemäße Vorrichtung kann insbesondere bei der Suche bzw. Ortung von Gaslecks an gasführenden Objekten verwendet werden oder auch bei Dichtigkeitsprüfungen von Rohrleitungen und Behältern in der industriellen Produktion und Prozesstechnik, beim Anlagenbau oder zur Überwachung technischer Infrastrukturen.

In einer weiteren Ausführungsform wird der Entfernungsmessstrahl unmittelbar von dem Laser emittiert, sodass der Anregungslaserstrahl gleichzeitig den Entfernungsmessstrahl bildet. Es versteht sich, dass in diesem Fall die Wellenlänge des Anregungslaserstrahls und die Wellenlänge des Entfernungsmessstrahls gleich sind. Dabei ist die Modulationseinrichtung derart mit dem Laser verbunden und so eingerichtet, dass die Amplitude oder die Wellenlänge des Entfernungsmessstrahls mit der zweiten Modulationsfrequenz moduliert wird. Der Abstrahlpunkt der Vorrichtung kann hier entweder an dem Punkt definiert werden, an dem der Laser die Strahlung erstmals emittiert oder auch an dem Punkt, an welchem die Strahlung beispielsweise das Gehäuse der Vorrichtung verlässt bzw. an welchem der Anregungslaserstrahl erstmals durch Absorption eines Gases abgeschwächt werden kann.

Dies bietet den Vorteil, dass lediglich ein einziger Laser notwendig ist, um sowohl den Entfernungsmessstrahl als auch den Anregungslaserstrahl zu emittieren. Als Folge werden Kosten durch eine zusätzliche Strahlungsquelle für den Entfernungsmessstrahl eingespart. Zudem wird sichergestellt, dass der Entfernungsmessstrahl unter dem gleichen Winkel auf denjenigen Punkt der Oberfläche fällt, an welchem auch der Anregungslaserstrahl reflektiert und/oder gestreut wird.

In einer weiteren Ausführungsform ist die Auswerteeinrichtung der Vorrichtung so ausgestaltet, dass sie eine Frequenzweiche aufweist, wobei die Frequenzweiche das von der Detektionseinrichtung übergebene Signal in ein mit der ersten Modulationsfrequenz moduliertes erstes Signal und ein mit der zweiten Modulationsfrequenz moduliertes zweites Signal aufteilt, sodass hinter der Frequenzweiche eine Bestimmung der Säulendichte anhand des ersten Signals und eine Bestimmung der räumlichen Entfernung anhand des zweiten Signals erfolgt. Eine solche Frequenzweiche stellt ein in der Elektrotechnik häufig verwendetes, entweder in Hardware oder in Software realisiertes, Bauelement dar, sodass das von der Detektionseinrichtung übergebene Signal kostengünstig und effizient in seine Bestandteile zerlegt wird.

In einer weiteren Ausführungsform weist die Vorrichtung zur Ferndetektion eines Zielgases weiterhin eine Pilotlichtquelle innerhalb der Beleuchtungseinrichtung auf, wobei die Pilotlichtquelle in einem Betrieb der Vorrichtung einen Pilotlichtstrahl mit einer Wellenlänge im sichtbaren Bereich, vorzugsweise im grünen Wellenlängenbereich, emittiert. In diesem Fall sind die Pilotlichtquelle und der Laser zwei separate Bauteile. Als Pilotlichtquelle kommt beispielsweise eine einfache und kostengünstige Laserdiode oder ein diodengepumpter Festkörperlaser infrage.

Durch diesen Pilotlichtstrahl wird ein Punkt auf dem Objekt sichtbar gemacht, an welchem der Anregungslaserstrahl und der Entfernungsmessstrahl reflektiert und/oder gestreut werden sollen. Zu diesem Zweck ist die Beleuchtungseinrichtung so eingerichtet, dass der Pilotlichtstrahl auf denselben Punkt auf der Oberfläche des Objektes trifft, an welchem auch der Entfernungsmessstrahl und der Anregungslaserstrahl reflektiert und/oder gestreut werden. Vorzugsweise wird der Pilotlichtstrahl kollinear mit dem Anregungslaserstrahl und dem Entfernungsmessstrahl geführt. Dies bietet den Vorteil, dass die Stelle, an welcher ein Leck detektiert werden soll, durch den Benutzer der Vorrichtung exakt ausgewählt und angepeilt wird. Es hat sich gezeigt, dass der grüne Wellenlängenbereich (ca. 500-550 nm) für diesen Zweck besonders geeignet ist, da grünes Licht mit dem menschlichen Auge auch bei größeren Entfernungen besonders gut zu erkennen ist.

In einer weiteren Ausführungsform der Vorrichtung ist dagegen vorgesehen, dass die Beleuchtungseinrichtung einen nichtlinearen optischen Kristall sowie eine Pumpstrahlungsquelle aufweist, wobei die Pumpstrahlungsquelle in dem Betrieb der Vorrichtung elektromagnetische Pumpstrahlung emittiert, wobei die Beleuchtungseinrichtung derart eingerichtet ist, dass der Pilotlichtstrahl aus dem Anregungslaserstrahl und der Pumpstrahlung in dem nichtlinearen optischen Kristall erzeugt wird, sodass der Pilotlichtstrahl, der Anregungslaserstrahl und der Entfernungsmessstrahl auf dem gleichen optischen Weg auf das Objekt abgestrahlt werden. Durch diese Ausgestaltung der Vorrichtung wird der Punkt, an welchem der Anregungslaserstrahl und der Entfernungsmessstrahl reflektiert und/oder gestreut werden, aufgrund der kollinearen Beleuchtung besonders präzise markiert.

Als Pumpstrahlungsquelle kommt beispielsweise eine leistungsstarke Diode mit einer Wellenlänge von 785 nm infrage. Die Konversion des Anregungslaserstrahls im nichtlinearen optischen Kristall wird dabei so ausgelegt, dass nur ein Teil des Anregungslaserstrahls konvertiert wird, sodass noch ausreichend Leistung für die Gasspektroskopie vorhanden ist.

In einer Ausführungsform erfolgen die Modulation des Anregungslaserstrahls und und die Modulation des Entfernungsmessstrahl und optional auch die Beleuchtung des Objekts mit dem Pilotlichtstrahl zeitlich gleichzeitig. D.h. insbesondere erfolgen in diesem Fall auch die Messung der mittleren Säulendichte und der räumlichen Entfernung gleichzeitig.

In einer weiteren Ausführungsform erfolgt der Betrieb der Vorrichtung sequentiell oder getaktet. Dabei erfolgt beispielsweise die Entfernungsmessung zeitlich versetzt zu der spektroskopischen Messung und/oder der Messbereichsmarkierung durch den Pilotlaser. Dies hat den Vorteil, dass beispielsweise das Pilotlicht die spektroskopische Messung nicht beeinflussen kann, andererseits kann ein Filtern der Signale entfallen, da das Entfernungsmesssignal und das spektroskopische Messsignal nicht gleichzeitig am Detektor eintreffen. Zudem kann das Signal-zu-Rausch-Verhältnis erhöht werden, da störende Hintergrundeinflüsse auf einen kürzeren Bereich eingeschränkt werden. Ein sequentieller oder getakteter Betrieb der Vorrichtung ist auch durch eine entsprechende Schaltung der Pumpstrahlungsquelle realisierbar. Typische Taktzeiten liegen in einem Bereich von 1 Hz bis 100 Hz.

In einer weiteren Ausführungsform der Vorrichtung wird die Pumpstrahlungsquelle durch die Modulationseinrichtung in ihrer Amplitude oder Wellenlänge mit der zweiten Modulationsfrequenz moduliert, wobei der Pilotlichtstrahl gleichzeitig den Entfernungsmessstrahl bildet. In diesem Fall ist die Wellenlänge des Entfernungsmessstrahls gleich der Wellenlänge des Pilotlichtstrahls. Der Abstrahlpunkt liegt in diesem Fall entweder im Bereich des nicht-linearen optischen Kristalls, also dort, wo der Entfernungsmessstrahl erzeugt wird oder wieder an dem Punkt des Gehäuses, an dem die Strahlungen das Gehäuse verlassen, d.h. an dem der Anregungslaserstrahl erstmals eine Abschwächung aufgrund von Gasabsorption erfährt.

Zu diesem Zweck weist die Detektionseinrichtung einen ersten und einen zweiten Detektor sowie einen optischen Strahlteiler auf. Dabei ist der Strahlteiler so eingerichtet, dass er den Anregungslaserstrahl zu dem ersten Detektor und den Entfernungsmessstrahl zu dem zweiten Detektor leitet. In diesem Fall kann auf eine Frequenzweiche verzichtet werden. Um die nicht benötigte, aber dennoch auf den Entfernungsmessstrahl aufgeprägte erste Modulationsfrequenz aus dem erfassten Entfernungsmessstrahl zu eliminieren, kommt ein herkömmlicher Hochpassfilter zum Einsatz.

Die Verwendung von zwei unterschiedlichen Detektoren ist insbesondere dann sinnvoll, wenn die Detektorempfindlichkeit oder Bandbreite des Detektors entweder nicht ausreicht, um ein bestimmtes Gas zu detektieren oder den Entfernungsmessstrahl hinreichend genau zu detektieren.

Diese Ausführungsform ist insbesondere dann vorteilhaft, wenn eine Gasabsorption im mittleren Infrarotbereich, d.h. bei Wellenlängen > 2 µm, erwartet wird. In diesem Wellenlängenbereich sind die Detektoren, die für die Entfernungsmessung zum Einsatz kommen könnten, deutlich weniger empfindlich als bei kürzeren Wellenlängen. Wird eine andere Wellenlänge für die Entfernungsmessung verwendet als für die Gasspektroskopie, so entfällt eine zusätzliche Kühlung der Detektoren, die für einen stabilen Messbetrieb bei längeren Wellenlängen sonst notwendig wäre.

In einer weiteren Ausführungsform der Vorrichtung weist die Detektionseinrichtung einen Filter auf, wobei der Filter den Anregungslaserstrahl und den Entfernungsmessstrahl zum Detektor passieren lässt und den Pilotlichtstrahl herausfiltert. Dies bietet den Vorteil, dass das detektierte Signal nicht durch den Pilotlichtstrahl verfälscht wird. Es versteht sich, dass diese Ausführungsform lediglich für solche Ausführungsformen der Vorrichtung in Frage kommt, bei welchen der Entfernungsmessstrahl nicht durch den Pilotlichtstrahl gebildet wird.

In einer weiteren Ausführungsform der Vorrichtung ist die erste Modulationsfrequenz so gewählt, dass sie kleiner als die zweite Modulationsfrequenz ist, wobei vorzugsweise die erste Modulationsfrequenz höchstens 1 kHz beträgt und/oder die zweite Modulationsfrequenz in einem Bereich von 100 kHz bis 10 GHz liegt, bevorzugt in einem Bereich von 1 MHz bis 5 MHz. In diesen Frequenzbereichen ist eine Trennung der beiden Messsignale zur Gasspektroskopie und Entfernungsbestimmung besonders gut möglich. Zudem ist in diesen Frequenzbereichen entsprechende Messtechnik vorhanden, die die Signale detektieren kann. Bei hohen Frequenzen größer als 1 MHz findet außerdem nur eine geringe Wellenlängenmodulation des Entfernungsmessstrahls statt, sodass die Genauigkeit der Entfernungsmessung erhöht wird. Letzteres ist im Falle einer Amplitudenmodulation der Entfernungsmessstrahlung von Bedeutung, da sich eine Amplitudenmodulation so wenig wie möglich auf die Wellenlänge bzw. Frequenz der Entfernungsmessstrahlung auswirken soll.

In einer weiteren Ausführungsform der Vorrichtung ist denkbar, dass die Wellenlänge des Anregungslaserstrahls mit einer dritten Modulationsfrequenz moduliert ist, insbesondere mit einer dritten Modulationsfrequenz im Bereich von 10 kHz bis 100 kHz. Dies bietet den Vorteil, dass ein Zielgas nicht nur bei exakt einer Wellenlänge angeregt wird, sondern ein bestimmter Wellenlängenbereich detektiert wird. So wird die Detektionssicherheit der Vorrichtung erhöht.

Bei dieser Ausführungsform kann zudem eine Derivativgasabsorptionsspektroskopie realisiert werden, bei welcher die Änderung des Absorptionsspektrums in Abhängigkeit von der Wellenlänge ausgewertet wird. Das Derivativspektrum hat dementsprechend an solchen Stellen Extrema, an denen das Ausgangsspektrum Wendepunkte aufweist und hat dort den Wert Null, an denen das Ausgangspektrum ein Extremum hat. In dem Derivativspektrum ist im Vergleich zum Ausgangsspektrum der Anteil der monoton verlaufenden Grundabsorption zugunsten von deutlichen Signal-Änderungen (Banden und Schultern) reduziert. Während beispielsweise die 1. Ableitung eine linear verlaufende Grundabsorption eliminiert, wird in der 2. Ableitung eine parabelförmige Grundabsorption eliminiert. Als Folge treten charakteristische Absorptionspeaks der jeweiligen Gassorte besonders hervor, wodurch eine Auswertung der Abschwächung des Anregungslaserstrahls vereinfacht wird.

Ferner wird die eingangs genannte Aufgabe durch ein Verfahren zur Ferndetektion eines Zielgases gelöst, welches die folgenden Schritte aufweist: Erzeugen eines monomodigen Anregungslaserstrahls mit einer Wellenlänge mit einem Laser, Modulieren der Wellenlänge des Anregungslaserstrahls mit einer ersten Modulationsfrequenz, Beleuchten eines Objekts mit dem modulierten Anregungslaserstrahl, wobei der Anregungslaserstrahl einen Pfad von einem Abstrahlpunkt zu dem Objekt zurücklegt, Erfassen des von dem Objekt reflektierten und/oder gestreuten Anregungslaserstrahls, Bestimmen der Säulendichte des Zielgases in einem von dem Anregungslaserstrahl durchstrahlten Volumen aus einer Abschwächung des an dem Objekt reflektierten und/oder gestreuten Anregungslaserstrahls, wobei das Verfahren weiterhin die Schritte aufweist, Erzeugen eines Entfernungsmessstrahls mit einer Wellenlänge mit dem Laser, Modulieren der Amplitude oder der Wellenlänge des Entfernungsmessstrahls mit einer zweiten Modulationsfrequenz, wobei die zweite Modulationsfrequenz verschieden ist von der ersten Modulationsfrequenz, Beleuchten des Objekts mit dem modulierten Entfernungsmessstrahl, wobei der Entfernungsmessstrahl auf dem gleichen optischen Pfad von dem Abstrahlpunkt zu dem Objekt geleitet wird wie der Anregungslaserstrahl, Erfassen des an dem Objekt reflektierten und/oder gestreuten Entfernungsmessstrahls, Bestimmen der räumlichen Entfernung zwischen dem Abstrahlpunkt und dem Objekt durch Auswerten des erfassten Entfernungsmessstrahls, wobei das Bestimmen der räumlichen Entfernung mithilfe einer Phasenmessung oder einer FMCW-Abstandsmessung erfolgt, und Bestimmen der Gaskonzentration des Zielgases aus der Säulendichte des Zielgases und der räumlichen Entfernung zwischen dem Abstrahlpunkt und dem Objekt.

In einer weiteren Ausführungsform weist das Verfahren weiterhin den Schritt auf, dass ein Signal angezeigt wird oder ertönt, wenn eine bestimmte Gaskonzentration des Zielgases einen vorbestimmten Schwellenwert überschreitet. Bei der Gasdetektion in geschlossenen Räumen werden so beispielsweise die entsprechenden Einsatzkräfte vorgewarnt.

In einer weiteren Ausführungsform weist das Verfahren weiterhin die Schritte auf, dass die Gaskonzentration des Zielgases in einem bestimmten zeitlichen Abstand wiederholt wird und eine Mehrzahl von bestimmten Gaskonzentration mit einem Zeitstempel aufgezeichnet wird, sowie vorzugsweise mit einer zusätzlichen Positions- und oder Richtungsinformation versehen wird. Auf diese Weise erfolgt eine lückenlose Überwachung der Gaskonzentration beispielsweise in einem Raum. Dieses Verfahren wird auch dazu verwendet, um Hintergrundgaskonzentrationen in der Umgebung zu bestimmen, die als Korrekturwerte bei der Detektion eines Zielgases im Bereich einer Leckage eingesetzt werden. Zu diesem Zweck wird mindestens eine verfahrensgemäße Messung in einem Bereich eines gasführenden Objektes, welches keine Leckage aufweist, oder eines anderen beliebigen Objektes, welches die Strahlung reflektiert, durchgeführt.

Bevorzugt werden solche Messungen zur Bestimmung der Hintergrundgaskonzentration mehrmals in einer Raumrichtung oder in verschiedenen Raumrichtungen und/oder mit verschiedenen räumlichen Entfernungen ausgeführt, sodass über die vermessenen Gaskonzentrationen gemittelt wird. Auf diese Weise wird eine genauere Hintergrundgaskonzentration bestimmt, die einer Leckdetektion eines Gases zugrunde gelegt wird.

Ferner wird die eingangs genannte Aufgabe durch die Verwendung eines zuvor beschriebenen Verfahrens zur Detektion eines Lecks in einer Oberfläche des Objektes gelöst, wobei das Objekt ein Element zum Führen des Zielgases ist und die folgenden Schritte durchgeführt werden: Ausrichten des Anregungslaserstrahls und des Entfernungsmessstrahls auf einen intakten Oberflächenbereich des Objektes, Bestimmen einer Hintergrundkonzentration des Zielgases zwischen dem Abstrahlpunkt und dem intakten Oberflächenbereich des Objektes, Ausrichten des Anregungslaserstrahls und des Entfernungsmessstrahls auf das Leck oder einen Oberflächenbereich des Objektes in einer Umgebung des Lecks, Bestimmen der Gaskonzentration des Zielgases zwischen dem Abstrahlpunkt und dem Leck oder dem Oberflächenbereich des Objektes in der Umgebung des Lecks, und Bestimmen der Gaskonzentration des Zielgases in einem Bereich nahe dem Leck durch Subtraktion der Hintergrundkonzentration des Zielgases von der Gaskonzentration des Zielgases zwischen Abstrahlpunkt und Objekt bei Gasaustritt aus dem Leck in dem Objekt.

Weitere Vorteile, Merkmale und Anwendungsmöglichkeiten der vorliegenden Erfindung werden anhand der folgenden Beschreibung von Ausführungsform und der dazugehörigen Figuren deutlich. In den Figuren sind gleiche Elemente mit gleichen Bezugszeichen bezeichnet.
- Figur 1: zeigt eine schematische Darstellung einer Ausführungsform der Vorrichtung mit einer separaten Pilotlichtquelle und einer Frequenzweiche zum Aufteilen der Signale.
- Figur 2: zeigt eine schematische Darstellung einer Ausführungsform der Vorrichtung bei welcher die Pilotlichtstrahlung mithilfe eines nichtlinearen optischen Kristalls und einer Pumpstrahlungsquelle erzeugt wird.
- Figur 3: zeigt eine schematische Darstellung einer Ausführungsform der Vorrichtung, bei welcher die Pumpstrahlungsquelle wirksam mit der Modulationseinrichtung verbunden ist.

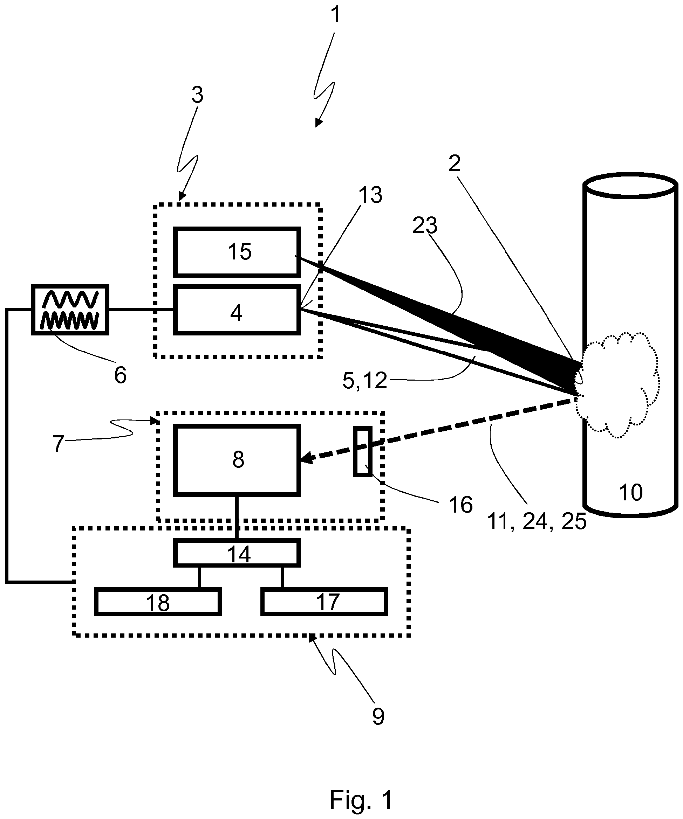

Gemäß Figur 1 weist die Vorrichtung 1 zur Ferndetektion eines Zielgases 2 eine Beleuchtungseinrichtung 3 auf, die einen Laser 4 und eine Pilotlichtquelle 15 umfasst. Der Laser 4 ist wirksam mit der Modulationseinrichtung 6 verbunden, wobei der vom Laser erzeugte Anregungslaserstrahl 5 eine Wellenlänge von 1652 nm hat, die mit einer ersten Frequenz moduliert ist und der ebenfalls vom Laser erzeugte Entfernungsmessstrahl 12 eine Wellenlänge von 1652 nm hat, wobei die Amplitude mit einer zweiten Modulationsfrequenz moduliert ist. Die Entfernungsmessung als auch die Gasspektroskopie erfolgen somit durch den gleichen Laserstrahl 5, 12.

Die Pilotlichtquelle 15 erzeugt einen Pilotlichtstrahl 23 mit einer Wellenlänge im sichtbaren, grünen Wellenlängenbereich bei 520 nm. Der Pilotlichtstrahl 23 wird dabei auf den gleichen Oberflächenpunkt des Objektes 10 gerichtet wie der Anregungslaserstrahl 5 und der Entfernungsmessstrahl 12.

Der an dem Objekt 10 gestreute und/oder reflektierte Anregungslaserstrahl 11 sowie der am Objekt 10 gestreute und/oder reflektierte Entfernungsmessstrahl 24 wird gemäß Figur 1 von einer Detektionseinrichtung 7 mit einem ersten Detektor 8 erfasst, wobei der am Objekt 10 gestreute und/oder reflektierte Pilotlichtstrahl 25 von einem Filter 16 herausgefiltert wird. Bei dem Detektor 8 handelt es sich um einen Fotodetektor, der den infraroten Anregungslaserstrahl11 und den Entfernungsmessstrahl 24 erfasst.

Die Detektionseinrichtung 7 ist derart wirksam mit einer Auswerteeinrichtung 9 verbunden, dass in dem Betrieb der Vorrichtung 1 ein den erfassten Anregungslaserstrahl 11 repräsentierendes Signal als auch ein den erfassten Entfernungsmessstrahl 24 repräsentierendes Signal an die Auswerteeinrichtung 9 übergeben werden.

Eine Frequenzweiche 14 der Auswerteeinrichtung 9 teilt das übergebene Signal in ein Signal, welches mit der ersten Modulationsfrequenz moduliert wurde, und in ein Signal, welches mit der zweiten Modulationsfrequenz moduliert wurde, auf. Zu diesem Zweck übermittelt die Modulationseinrichtung 6 die erste und die zweite Modulationsfrequenz als Referenzen an die Frequenzweiche 14. Entsprechend den übergebenen Referenzen teilt die Frequenzweiche 14 das übergebene Signal auf.

Aus dem Signal, welches mit der ersten Modulationsfrequenz moduliert wurde, wird die Säulendichte 18 des Zielgases 2 bestimmt und aus dem Signal, welches mit der zweiten Modulationsfrequenz moduliert wurde, wird der Wert 17 der räumlichen Entfernung zwischen Abstrahlpunkt 13 und Objekt 10 bestimmt.

Um die Säulendichte 18 des Zielgases 2 zu bestimmen, wird die Abschwächung des am Objekt reflektierten und detektierten Anregungslaserstrahls 24 im Vergleich zu dem ausgesandten Anregungslaserstrahl 5 erfasst. Durch die Wechselwirkung des Anregungslaserstrahls 5 mit dem Zielgas 2, kommt es zu einer Anregung von Molekülschwingungen und Rotationsübergängen innerhalb des Zielgases 2, wodurch ein Teil der Energie des Anregungslaserstrahls 5 absorbiert wird, sodass dessen Intensität abgeschwächt wird.

Für die Entfernungsmessung kommt eine Phasenmessung zum Einsatz. Zu diesem Zweck wird die Amplitude des Entfernungsmessstrahls 12 mit der zweiten Modulationsfrequenz hochfrequent moduliert. Bei der Reflexion des Entfernungsmessstrahls 12 an dem Objekt 10 kommt es zu einer Phasenverschiebung der Amplitudenmodulation des am Objekt 10 reflektierten Entfernungsmessstrahls 24 im Vergleich zu der Amplitudenmodulation des ausgesandten Entfernungsmessstrahl 12. Diese Phasenverschiebung ist abhängig von der räumlichen Entfernung zwischen Abstrahlpunkt 13 und Objekt 10.

Zur Vermessung der Phasenverschiebung der Amplitudenmodulation weist die Auswerteeinrichtung 9 einen Phasendetektor auf, in welchem die Phase des Amplitudenmodulationssignals der Modulationseinrichtung 6 mit der Phase der Amplitudenmodulation des in der Detektionseinrichtung 7 erfassten Entfernungsmessstrahls 24 verglichen wird. Dabei wird die Phasenverschiebung zwischen dem detektierten Entfernungsmessstrahl 24 und dem Amplitudenmodulationssignal erfasst, woraus der Wert der gesuchten räumlichen Entfernung 17 zwischen Abstrahlpunkt 13 und Objekt 10 berechnet werden kann.

Aus der Kombination der beiden Werte 17, 18 kann nachfolgend die Gaskonzentration des Zielgases 2 ermittelt werden.

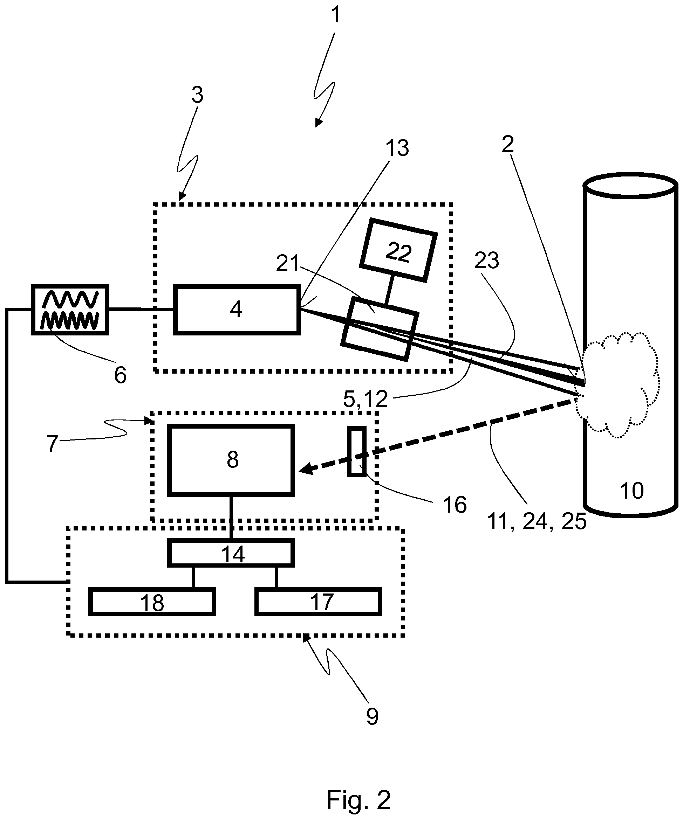

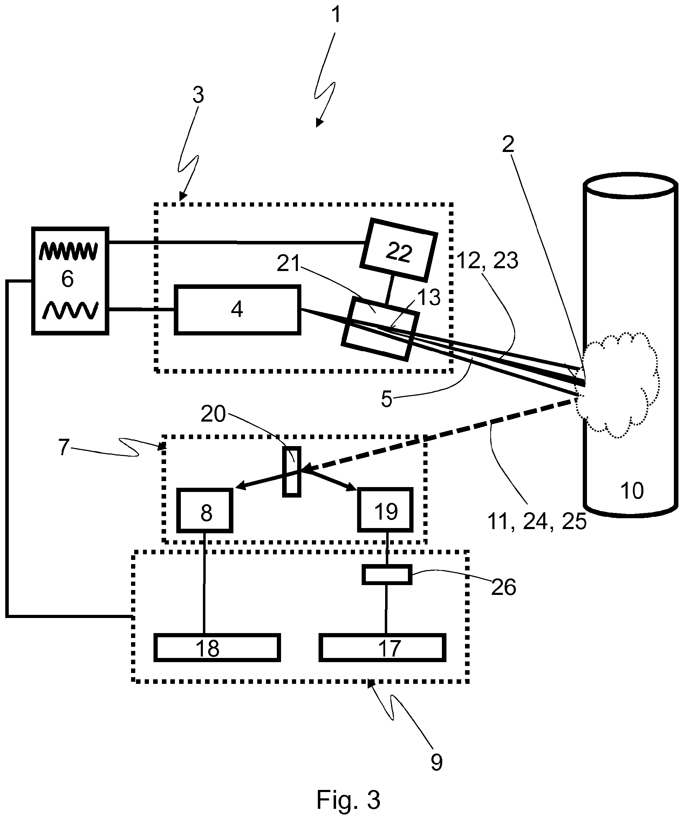

Den in den Figuren 2 und 3 dargestellten Ausführungsformen der Vorrichtung 1 ist gemeinsam, dass sie in der Beleuchtungseinrichtung 3 einen nichtlinearen optischen Kristall 21 sowie eine Pumpstrahlungsquelle 22 aufweisen, die dafür verwendet werden, den Pilotlichtstrahl 23 aus der Anregungslaserstrahlung 5 zu erzeugen.

Gemäß der in Figur 2 dargestellten Ausführungsform der Vorrichtung 1 ist lediglich der Laser 4 wirksam mit der Modulationseinrichtung 6 verbunden, sodass wie bei der in Figur 1 gezeigten Ausführungsform der Anregungslaserstrahl 5 den Entfernungsmessstrahl 12 bildet, d.h. dass die Entfernungsmessung und die Gasspektroskopie mit dem gleichen Laserstrahl 5, 12 erfolgen.

In dieser Ausführungsform trifft der Pilotlichtstrahl 23 kollinear auf die gleiche Oberfläche des Objektes 10 wie der Anregungslaserstrahl 5 und der Entfernungsmessstrahl 12.

Die Detektion des am Objekt 10 reflektierten und/oder gestreuten Anregungslaserstrahls 11 sowie des Entfernungsmessstrahl 24 erfolgt analog zu der in Figur 1 gezeigten Ausführungsform. Die Bestimmung der Säulendichte 18 des Zielgases 2 erfolgt analog zu der in Figur 1 gezeigten Ausführungsform.

Die Entfernungsmessung erfolgt bei der Ausführungsform gemäß Figur 2 durch eine FMCW-Abstandsmessung. Zur Modulation der Wellenlänge bzw. Frequenz des Entfernungsmessstrahls 12 wird eine Sägezahnfunktion verwendet. So wird jedem Abstrahlzeitpunkt eine Wellenlänge des Entfernungsmessstrahls 12 zugewiesen. Da sich folglich Frequenz und Wellenlänge des Entfernungsmessstrahls 12 während der Laufzeit zum Objekt 10 und zurück nahezu linear verändert, ist der an dem Objekt 10 reflektierte und/oder gestreute und von der Detektionseinrichtung detektierte Entfernungsmessstrahl 24 gegenüber einer direkt an die Auswerteeinrichtung 9 übertragenen Referenzsignal frequenzverschoben. Durch Mischen eines Referenzsignals mit dem am Objekt 10 reflektierten und/oder gestreuten und detektierten Entfernungsmessstrahl 24, werden die Wellenlänge bzw. Frequenzverschiebung und damit die Zeitverschiebung bestimmt. Da das Modulationssignal der Modulationseinrichtung 5 an die Auswerteeinrichtung 9 weitergeleitet wird, ist die zeitliche Kodierung der Wellenlängen bzw. Frequenzen des ausgesendeten Entfernungsmessstrahls 12 während der Auswertung bekannt. Somit wird die Laufzeit des Entfernungsmessstrahls 12 zwischen Abstrahlpunkt 13 und Objekt 10 ermittelt. Die Laufzeit wiederum ist proportional zu der räumlichen Entfernung 17.

Gemäß Figur 3 ist in einer Ausführungsform der Vorrichtung 1 die Pumpstrahlungsquelle 22 wirksam mit der Modulationseinrichtung 6 verbunden. So wird die Pumpstrahlung der Pumpstrahlungsquelle 22 mit der zweiten Modulationsfrequenz moduliert. In diesem Fall bildet der Pilotlichtstrahl 23 den Entfernungsmessstrahl 12. Der Abstrahlpunkt 13 befindet sich an derjenigen Position im nichtlinearen optischen Kristall 21, an welcher der Entfernungsmessstrahl 12 erzeugt wird.

Gemäß der in Figur 3 gezeigten Ausführungsform ist der Anregungslaserstrahl 5 lediglich mit der ersten Modulationsfrequenz moduliert, wohingegen der Entfernungsmessstrahl 12, der gleich dem Pilotlichtstrahl 23 ist, sowohl mit der ersten als auch mit der zweiten Modulationsfrequenz moduliert ist.

Zur Erfassung des reflektierten Entfernungsmessstrahls 24 und des reflektierten Anregungslaserstrahls 11 weist die Detektionseinrichtung 7 gemäß der in Figur 3 gezeigten Ausführungsform einen Strahlteiler 20 und einen zweiten Detektor 19 auf, wobei der Strahlteiler 20 derart eingerichtet ist, dass der Strahlteiler 20 in dem Betrieb der Vorrichtung 1 den reflektierten und/oder gestreuten Anregungslaserstrahl 11 zu dem ersten Detektor 8 leitet und den reflektierten und/oder gestreuten Entfernungsmessstrahl 24 zu dem zweiten Detektor 18 leitet. In dieser Ausführungsform entfällt eine Frequenzweiche 14. Um die niederfrequenten Anteile in dem Entfernungsmessstrahl zu entfernen, kommt ein Hochpassfilter 26 zum Einsatz.

Die Auswertung der Daten kann entweder analog zu der in Figur 1 gezeigten Ausführungsform erfolgen oder analog zu der in Figur 2 gezeigten Ausführungsform.

In einer weiteren, nicht dargestellten Ausführungsform der Vorrichtung 1 ist es daher vorteilhaft, wenn der Bereich zwischen dem Laser 4 und dem nichtlinearen optischen Kristall 21 frei von Gasen gehalten wird, die den Anregungslaserstrahl 5 absorbieren könnten, da für diesen Abschnitt keine Entfernungsmessung durchgeführt wird, eine Kompensation der Gasabsorption in diesem Bereich damit nicht möglich ist. Alternativ erfolgt die Kompensation der Hintergrundgaskonzentration innerhalb der Vorrichtung 1 durch eine Referenzmessung an einem bekannten Testobjekt.

In allen der gezeigten Ausführungsformen wird die erste Modulationsfrequenz kleiner als die 2. Modulationsfrequenz gewählt, wobei die erste Modulationsfrequenz 1 kHz und die zweite Modulationsfrequenz 3 MHz beträgt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch im beliebigen Zusammenstellung mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung dagegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Merkmale oder Schritte aus und der unbestimmte Artikel "einer" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Vorrichtung
- 2: Zielgas
- 3: Beleuchtungseinrichtung
- 4: Laser
- 5: Anregungslaserstrahl
- 6: Modulationseinrichtung
- 7: Detektionseinrichtung
- 8: Erster Detektor
- 9: Auswerteeinrichtung
- 10: Objekt
- 11: Reflektierter und/oder gestreuter Anregungslaserstrahl
- 12: Entfernungsmessstrahl
- 13: Abstrahlpunkt
- 14: Frequenzweiche
- 15: Pilotlichtquelle
- 16: Filter
- 17: Wert der räumlichen Entfernung
- 18: Säulendichte des Zielgases
- 19: Zweiter Detektor
- 20: Optischer Strahlteiler
- 21: Nichtlinearer optischer Kristall
- 22: Pumpstrahlungsquelle
- 23: Pilotlichtstrahl
- 24: Reflektierter und/oder gestreuter Entfernungsmessstrahl
- 25: Reflektierter und/oder gestreuter Pilotlichtstrahl
- 26: Hochpassfilter

## Patentansprüche

1. Vorrichtung (1) zur Ferndetektion eines Zielgases (2) aufweisend
eine Beleuchtungseinrichtung (3) mit einem Laser (4), wobei der Laser (4) derart eingerichtet ist, dass der Laser (4) in einem Betrieb der Vorrichtung (1) einen monomodigen Anregungslaserstrahl (5) mit einer Wellenlänge emittiert,
eine Modulationseinrichtung (6),
eine Detektionseinrichtung (7) mit einem ersten Detektor (8), die derart eingerichtet ist, dass in dem Betrieb der Vorrichtung (1) der Anregungslaserstrahl (5) von der Detektionseinrichtung (7) erfasst wird, und
eine Auswerteeinrichtung (9),
wobei die Modulationseinrichtung (6) und der Laser (4) derart eingerichtet und angeordnet sind, dass in dem Betrieb der Vorrichtung (1) die Wellenlänge des Anregungslaserstrahls (5) mit einer ersten Modulationsfrequenz moduliert ist,
wobei die Beleuchtungseinrichtung (3) und die Detektionseinrichtung (7) derart angeordnet sind, dass in dem Betrieb der Vorrichtung (1) der Anregungslaserstrahl (5) von einem Abstrahlpunkt (13) auf ein Objekt (10) abstrahlbar ist und der von dem Objekt (10) reflektierte und/oder gestreute Anregungslaserstrahl (11) von der Detektionseinrichtung (7) erfassbar ist,
wobei die Detektionseinrichtung (7) und die Auswerteeinrichtung (9) derart wirksam miteinander verbunden sind, dass in dem Betrieb der Vorrichtung (1) ein den erfassten Anregungslaserstrahl (11) repräsentierendes Signal von der Detektionseinrichtung (7) an die Auswerteeinrichtung (9) übergeben wird, und
wobei die Auswerteeinrichtung (9) derart eingerichtet ist, dass in dem Betrieb der Vorrichtung (1) die Auswerteeinrichtung (9) das von der Detektionseinrichtung (7) übergebene Signal auswertet, wobei aus einer Abschwächung des Anregungslaserstrahls (5,11) die mittlere Säulendichte (18) des Zielgases (2) in einem von dem Anregungslaserstrahl (5,11) durchstrahlten Volumen bestimmt wird,
wobei
die Beleuchtungseinrichtung (3) derart eingerichtet und angeordnet ist, dass in dem Betrieb der Vorrichtung (1) die Beleuchtungseinrichtung (3) einen Entfernungsmessstrahl (12) mit einer Wellenlänge abstrahlt, wobei der Laser (4) zur Generation des Entfernungsmessstrahls (12) beiträgt,
die Beleuchtungseinrichtung (3) derart eingerichtet und angeordnet ist, dass in dem Betrieb der Vorrichtung (1) der Entfernungsmessstrahl (12) auf dem gleichen optischen Pfad von dem Abstrahlpunkt (13) auf das Objekt (10) abstrahlbar ist wie der Anregungslaserstrahl (5),
die Modulationseinrichtung (6) und die Beleuchtungseinrichtung (3) derart eingerichtet sind, dass in dem Betrieb der Vorrichtung (1) die Amplitude oder die Wellenlänge des Entfernungsmessstrahls (12) mit einer zweiten Modulationsfrequenz moduliert ist, wobei die zweite Modulationsfrequenz verschieden ist von der ersten Modulationsfrequenz,
die Modulationseinrichtung (6) derart wirksam mit der Auswerteeinrichtung (9) verbunden ist, dass in dem Betrieb der Vorrichtung (1) von der Modulationseinrichtung (6) ein Signal an die Auswerteeinrichtung (9) übergeben wird, wobei das Signal die Modulationsfrequenz repräsentiert,
die Detektionseinrichtung (7) derart eingerichtet und angeordnet ist, dass in dem Betrieb der Vorrichtung (1) der an dem Objekt (10) reflektierte und/oder gestreute Entfernungsmessstrahl (24) von der Detektionseinrichtung (7) erfassbar ist,
die Detektionseinrichtung (7) derart wirksam mit der Auswerteeinrichtung (9) verbunden ist, dass in dem Betrieb der Vorrichtung (1) ein den erfassten Entfernungsmessstrahl (24) repräsentierendes Signal an die Auswerteeinrichtung (9) übergeben wird, und die Auswerteeinrichtung (9) derart eingerichtet ist, dass in dem Betrieb der Vorrichtung (1) die Auswerteeinrichtung (9) aus dem übergebenen Signal die räumlichen Entfernung (17) zwischen dem Abstrahlpunkt (13) und dem Objekt (10) bestimmt, wobei die räumliche Entfernung (17) mittels einer Phasenmessung oder einer FMCW-Abstandsmessung bestimmt wird, und dass aus der mittleren Säulendichte (18) des Zielgases (2) und der räumlichen Entfernung (17) die mittlere Gaskonzentration des Zielgases (2) bestimmt wird.

2. Vorrichtung (1) nach Anspruch 1, wobei der Entfernungsmessstrahl (12) von dem Laser (4) emittiert wird, so dass die Wellenlänge des Anregungslaserstrahls (5) und die Wellenlänge des Entfernungsmessstrahls (12) gleich sind, und die Modulationseinrichtung (6) derart wirksam mit dem Laser (4) verbunden ist, dass die Amplitude oder die Wellenlänge des Entfernungsmessstrahls (12) mit der zweiten Modulationsfrequenz moduliert ist.

3. Vorrichtung (1) nach einem der vorhergehenden Ansprüche, wobei die Auswerteeinrichtung (9) eine Frequenzweiche (14) aufweist, wobei die Frequenzweiche (14) das von der Detektionseinrichtung (7) übergebene Signal in ein mit der ersten Modulationsfrequenz moduliertes erstes Signal und ein mit der zweiten Modulationsfrequenz moduliertes zweites Signal aufteilt, so dass nach Durchlaufen der Frequenzweiche (14) eine Bestimmung der Säulendichte (18) anhand des ersten Signals und eine Bestimmung der räumlichen Entfernung (17) anhand des zweiten Signals erfolgt.

4. Vorrichtung (1) nach einem der vorhergehenden Ansprüche, wobei die Beleuchtungseinrichtung (3) eine Pilotlichtquelle (15) aufweist, die derart eingerichtet ist, dass die Pilotlichtquelle (15) in dem Betrieb der Vorrichtung (1) einen Pilotlichtstrahl (23) mit einer Wellenlänge im sichtbaren Bereich, vorzugsweise im grünen Wellenlängenbereich, emittiert, wobei die Beleuchtungseinrichtung (3) derart eingerichtet ist, dass durch den Pilotlichtstrahl (23) ein Punkt auf dem Objekt (10) markierbar ist, an welchem der Anregungslaserstrahl (5) und der Entfernungsmessstrahl (12) reflektiert und/ oder gestreut werden.

5. Vorrichtung (1) nach Anspruch 4, wobei die Beleuchtungseinrichtung (3) einen nichtlinearen optischen Kristall (21) und eine Pumpstrahlungsquelle (22) aufweist, wobei die Pumpstrahlungsquelle (22) in dem Betrieb der Vorrichtung (1) elektromagnetische Pumpstrahlung mit einer Amplitude und einer Wellenlänge emittiert, wobei die Beleuchtungseinrichtung (3) derart eingerichtet ist, dass in dem Betrieb der Vorrichtung (1) der Anregungslaserstrahl (5), der Entfernungsmessstrahl (12) und die Pumpstrahlung in dem nichtlinearen optischen Kristall (21) den Pilotlichtstrahl (23) erzeugen, so dass der Pilotlichtstrahl (23), der Anregungslaserstrahl (5) und der Entfernungsmessstrahl (12) auf dem gleichen optischen Weg auf das Objekt (10) abstrahlbar sind.

6. Vorrichtung (1) nach Anspruch 5 soweit nicht abhängig von Anspruch 2, wobei die Pumpstrahlungsquelle (22) derart wirksam mit der Modulationseinrichtung (6) verbunden ist, dass in dem Betrieb der Vorrichtung (1) die Amplitude oder die Wellenlänge der Pumpstrahlung mit der zweiten Modulationsfrequenz moduliert ist, wobei der Pilotlichtstrahl (23) den Entfernungsmessstrahl (12) bildet und wobei die Wellenlänge des Entfernungsmessstrahls (12) gleich der Wellenlänge des Pilotlichtstrahls (23) ist.

7. Vorrichtung (1) nach einem der Ansprüche 4 bis 6, wobei die Detektionseinrichtung (7) einen Filter (16) aufweist, wobei der Filter (16) derart eingerichtet ist, dass der Filter (16) in dem Betrieb der Vorrichtung (1) den am Objekt (10) reflektierten und/oder gestreuten Anregungslaserstrahl (11) und den am Objekt (10) reflektierten und/oder gestreuten Entfernungsmessstrahl (24) zu dem Detektor (8) passieren lässt und den Pilotlichtstrahl (23) herausfiltert.

8. Vorrichtung (1) nach Anspruch 7, wobei die Detektionseinrichtung (7) einen ersten Detektor (8) und einen zweiten Detektor (19) aufweist sowie einen optischen Strahlteiler (20), wobei der optische Strahlteiler (20) derart eingerichtet ist, dass der optische Strahlteiler (20) in dem Betrieb der Vorrichtung (1) den am Objekt (10) reflektierten und/oder gestreuten Anregungslaserstrahl (11) zu dem ersten Detektor (8) leitet und den am Objekt (10) reflektierten und/oder gestreuten Entfernungsmessstrahl (24) zu dem zweiten Detektor (19) leitet.

9. Vorrichtung (1) nach einem der vorhergehenden Ansprüche, bei der die erste Modulationsfrequenz kleiner ist als die zweite Modulationsfrequenz, wobei vorzugsweise die erste Modulationsfrequenz höchstens 1 kHz beträgt und/oder die zweite Modulationsfrequenz in einem Bereich von 100 kHz bis 10 GHz liegt, bevorzugt in einem Bereich von 1 MHz bis 5 MHz.

10. Vorrichtung (1) nach einem der vorhergehenden Ansprüche, bei der die Wellenlänge des Anregungslaserstrahls (5) mit einer dritten Modulationsfrequenz moduliert ist, insbesondere mit einer dritten Modulationsfrequenz im Bereich von 10 kHz bis 100 kHz.

11. Verfahren zur Ferndetektion eines Zielgases (2) mit den Schritten:
Erzeugen eines monomodigen Anregungslaserstrahls (5) mit einer Wellenlänge mit einem Laser (4),
Modulieren der Wellenlänge des Anregungslaserstrahls (5) mit einer ersten Modulationsfrequenz,
Beleuchten eines Objekts (10) mit dem modulierten Anregungslaserstrahl (5), wobei der Anregungslaserstrahl (5) einen Pfad von einem Abstrahlpunkt (13) zu dem Objekt (10) zurücklegt,
Erfassen des von dem Objekt (10) reflektierten und/ oder gestreuten Anregungslaserstrahls (11),
Bestimmen der mittleren Säulendichte (18) des Zielgases (2) in einem von dem Anregungslaserstrahl (5,11) durchstrahlten Volumen aus einer Abschwächung des an dem Objekt (10) reflektierten und/ oder gestreuten Anregungslaserstrahls (5,11),
wobei
das Verfahren weiterhin die Schritte aufweist
Erzeugen eines Entfernungsmessstrahls (12) mit einer Wellenlänge mit dem Laser (4),
Modulieren der Amplitude oder der Wellenlänge des Entfernungsmessstrahls (12) mit einer zweiten Modulationsfrequenz, wobei die zweite Modulationsfrequenz verschieden ist von der ersten Modulationsfrequenz,
Beleuchten des Objekts (10) mit dem modulierten Entfernungsmessstrahl (12), wobei der Entfernungsmessstrahl (12) auf dem gleichen optischen Pfad von dem Abstrahlpunkt (13) zu dem Objekt (10) geleitet wird wie der Anregungslaserstrahl (5),
Erfassen des an dem Objekt (10) reflektierten und/ oder gestreuten Entfernungsmessstrahls (24),
Bestimmen der räumlichen Entfernung (17) zwischen dem Abstrahlpunkt (13) und dem Objekt (10) durch Auswerten des erfassten Entfernungsmessstrahls (24), wobei das Bestimmen der räumlichen Entfernung (17) mit Hilfe einer Phasenmessung oder einer FMCW-Abstandsmessung erfolgt, und
Bestimmen der mittleren Gaskonzentration des Zielgases (2) aus der mittleren Säulendichte (18) des Zielgases (2) und der räumlichen Entfernung (17) zwischen dem Abstrahlpunkt (13) und dem Objekt (10).

12. Verfahren nach Anspruch 11, wobei das Verfahren weiterhin den Schritt aufweist, Anzeigen eines Signals, wenn die bestimmte mittlere Gaskonzentration des Zielgases (2) einen vorbestimmten Schwellenwert überschreitet.

13. Verfahren nach Anspruch 11 oder 12, wobei das Verfahren weiterhin die Schritte aufweist, wiederholtes zeitlich beanstandetes Bestimmen der mittleren Gaskonzentration des Zielgases (2) und Aufzeichnen einer Mehrzahl von bestimmten mittleren Gaskonzentrationen mit einem Zeitstempel und vorzugsweise mit einer zusätzlichen Positions- und/oder Richtungsinformation.

14. Verfahren nach einem der Ansprüche 11 bis 13, wobei das Verfahren weiterhin den Schritt aufweist, Mitteln über eine Mehrzahl von in einer Raumrichtung oder in verschiedenen Raumrichtungen und/oder mit verschiedenen räumlichen Entfernungen (17) bestimmten mittleren Gaskonzentrationen.

15. Verwendung eines Verfahrens nach einem der Ansprüche 11 bis 14 zur Detektion eines Lecks in einer Oberfläche des Objektes (10), wobei das Objekt (10) ein Element zum Führen des Zielgases (2) ist, mit den Schritten
Ausrichten des Anregungslaserstrahls (5) und des Entfernungsmessstrahls (12) auf einen intakten Oberflächenbereich des Objektes (10),
Bestimmen einer Hintergrundkonzentration des Zielgases (2) zwischen dem Abstrahlpunkt (13) und dem intakten Oberflächenbereich des Objektes (10),
Ausrichten des Anregungslaserstrahls (5) und des Entfernungsmessstrahl (12) auf das Leck oder auf einen Oberflächenbereich des Objektes (10) in einer Umgebung des Lecks,
Bestimmen der mittleren Gaskonzentration des Zielgases (2) zwischen dem Abstrahlpunkt (13) und dem Leck oder dem Oberflächenbereich des Objektes (10) in der Umgebung des Lecks, und
Bestimmen der mittleren Gaskonzentration des Zielgases (2) in einem Bereich nahe dem Leck durch Subtraktion der mittleren Hintergrundkonzentration des Zielgases (2) von der mittleren Gaskonzentration des Zielgases (2) zwischen Abstrahlpunkt (13) und Objekt (10) bei Gasaustritt aus dem Leck in dem Objekt (10).

## Claims

1. Apparatus (1) for the remote detection of a target gas (2) comprising
an illumination device (3) having a laser (4), wherein the laser (4) is so adapted that in operation of the apparatus (1) the laser (4) emits a single-mode excitation laser beam (5) with a wavelength,
a modulation device (6),
a detection device (7) having a first detector (8) and which is so adapted that in operation of the apparatus (1) the excitation laser beam (5) is detected by the detection device (7), and
an evaluation device (9),
wherein the modulation device (6) and the laser (4) are so adapted and arranged that in operation of the apparatus (1) the wavelength of the excitation laser beam (5) is modulated with a first modulation frequency,
wherein the illumination device (3) and the detection device (7) are so arranged that in operation of the apparatus (1) the excitation laser beam (5) can be radiated from a radiation point (13) on to an object (10) and the excitation laser beam (11) which is reflected and/or scattered by the object (10) can be detected by the detection device (7),
wherein the detection device (7) and the evaluation device (9) are operatively connected together in such a way that in operation of the apparatus (1) a signal representing the detected excitation laser beam (11) is transmitted from the detection device (7) to the evaluation device (9), and
wherein the evaluation device (9) is so adapted that in operation of the apparatus (1) the evaluation device (9) evaluates the signal transmitted by the detection device (7), wherein the mean column density (18) of the target gas (2) is determined in a volume through which the excitation laser beam (5, 11) passes from an atenuation of the excitation laser beam (5, 11),
wherein the illumination device (3) is so adapted and arranged that in operation of the apparatus (1) the illumination device (3) radiates a distance measuring beam (12) with a wavelength, wherein the laser (4) contributes to the generation of the distance measuring beam (12),
the illumination device (3) is so adapted and arranged that in operation of the apparatus (1) the distance measuring beam (12) can be radiated on the same optical path from the radiation point (13) on to the object (10) as the excitation laser beam (5),
the modulation device (6) and the illumination device (3) are so adapted that in operation of the apparatus (1) the amplitude or the wavelength of the distance measuring beam (12) is modulated with a second modulation frequency, wherein the second modulation frequency is different from the first modulation frequency,
the modulation device (6) is operatively connected to the evaluation device (9) such that in operation of the apparatus (1) a signal is transmitted from the modulation device (6) to the evaluation device (9), wherein the signal represents the modulation frequency,
the detection device (7) is so adapted and arranged that in operation of the apparatus (1) the distance measuring beam (24) which is reflected and/or scattered at the object (10) can be detected by the detection device (7),
the detection device (7) is operatively connected to the evaluation device (9) such that in operation of the apparatus (1) a signal representing the detected distance measuring beam (24) is transmitted to the evaluation device (9), and the evaluation device (9) is so adapted that in operation of the apparatus (1) the evaluation device (9) determines from the transmitted signal the spatial distance (17) between the radiation point (13) and the object (10), wherein the spatial distance (17) is determined by means of phase measurement or an FMCW distance measurement and the mean gas concentration of the target gas (2) is determined from the mean column density (18) of the target gas (2) and the spatial distance (17).

2. Apparatus (1) according to claim 1 wherein the distance measuring beam (12) is emitted by the laser (4) so that the wavelength of the excitation laser beam (5) and the wavelength of the distance measuring beam (12) are the same and the modulation device (6) is operatively connected to the laser (4) such that the amplitude or the wavelength of the distance measuring beam (12) is modulated with the second modulation frequency.

3. Apparatus (1) according to one of the preceding claims wherein the evaluation device (9) has a frequency crossover (14), wherein the frequency crossover (14) divides the signal transmitted by the detection device (7) into a first signal modulated with the first modulation frequency and a second signal modulated with the second modulation frequency so that after passing through the frequency crossover (14) the column density (18) is determined on the basis of the first signal and the spatial distance (17) is determined on the basis of the second signal.

4. Apparatus (1) according to one of the preceding claims wherein the illumination device (3) has a pilot light source (15) which is so adapted that in operation of the apparatus (1) the pilot light source (15) emits a pilot light beam (23) with a wavelength in the visible range, preferably in the green wavelength range, wherein the illumination device (3) is so adapted that a point can be marked on the object (10), at which the excitation laser beam (5) and/or the distance measuring beam (12) are reflected and/or scattered, by the pilot light beam (23).

5. Apparatus (1) according to claim 4 wherein the illumination device (3) has a non-linear optical crystal (21) and a pump radiation source (22), wherein in operation of the apparatus (1) the pump radiation source (22) emits electromagnetic pump radiation with an amplitude and a wavelength, wherein the illumination device (3) is so adapted that in operation of the apparatus (1) the excitation laser beam (5), the distance measuring beam (12) and the pump radiation generate in the non-linear optical crystal (21) the pilot light beam (23) so that the pilot light beam (23), the excitation laser beam (5) and the distance measuring beam (12) can be radiated on to the object (10) on the same optical path.

6. Apparatus (1) according to claim 5 when not appended to claim 2 wherein the pump radiation source (22) is operatively connected to the modulation device (5) in such a way that in operation of the apparatus (1) the amplitude or the wavelength of the pump radiation is modulated with the second modulation frequency, wherein the pilot light beam (23) forms the distance measuring beam (12) and wherein the wavelength of the distance measuring beam (12) is equal to the wavelength of the pilot light beam (23).

7. Apparatus (1) according to one of claims 4 to 6 wherein the detection device (7) has a filter (16), wherein the filter (16) is so adapted that in operation of the apparatus (1) the filter (16) allows the excitation laser beam (11) which is reflected and/or scattered at the object (10) and the distance measuring beam (24) which is reflected and/or scattered at the object (10) to pass to the detector (8) and filters out the pilot light beam (23).

8. Apparatus (1) according to claim 7 wherein the detection device (7) has a first detector (8) and a second detector (19) as well as an optical beam splitter (20), wherein the optical beam splitter (20) is so adapted that in operation of the apparatus (1) the optical beam splitter (20) passes the excitation laser beam (11) which is reflected and/or scattered at the object (10) to the first detector (8) and passes the distance measuring beam (24) which is reflected and/or scattered at the object (10) to the second detector (19).

9. Apparatus (1) according to one of the preceding claims in which the first modulation frequency is lower than the second modulation frequency, wherein preferably the first modulation frequency is at most 1 kHz and/or the second modulation frequency is in a range of 100 kHz to 10 GHz, preferably in a range of 1 MHz to 5 MHz.

10. Apparatus (1) according to one of the preceding claims in which the wavelength of the excitation laser beam (5) is modulated with a third modulation frequency, in particular with a third modulation frequency in the range of 10 kHz to 100 kHz.

11. A method of remote detection of a target gas (2) comprising the steps:
generating a single-mode excitation laser beam (5) with a wavelength with a laser (4),
modulating the wavelength of the excitation laser beam (5) with a first modulation frequency,
illuminating an object (10) with the modulated excitation laser beam (5), wherein the excitation laser beam (5) covers a path from a radiation point (13) to the object (10),
detecting the excitation laser beam (11) which is reflected and/or scattered by the object (10),
determining the mean column density (18) of the target gas (2) in a volume through which the excitation laser beam (5, 11) passes from an attenuation of the excitation laser beam (5, 11) which is reflected and/or scattered at the object (10),
wherein the method further comprises the steps:
generating a distance measuring beam (12) with a wavelength with the laser (4),
modulating the amplitude or the wavelength of the distance measuring beam (12) with a second modulation frequency, wherein the second modulation frequency is different from the first modulation frequency,
illuminating the object (10) with the modulated distance measuring beam (12), wherein the distance measuring beam (12) is passed on the same optical path from the radiation point (13) to the object (10) as the excitation laser beam (5),
detecting the distance measuring beam (24) which is reflected and/or scattered at the object (10),
determining the spatial distance (17) between the radiation point (13) and the object (10) by evaluation of the detected distance measuring beam (24), wherein the spatial distance (17) is determined by means of a phase measurement or an FMCW distance measurement, and
determining the mean gas concentration of the target gas (2) from the mean column density (18) of the target gas (2) and the spatial distance (17) between the radiation point (13) and the object (10).

12. A method according to claim 11 wherein the method further comprises the step:
displaying a signal when the determined mean gas concentration of the target gas (2) exceeds a predetermined threshold value.

13. A method according to claim 11 or claim 12 wherein the method further comprises the step:
repeatedly determining in time-spaced relationship the mean gas concentration of the target gas (2) and recording a plurality of determined mean gas concentrations with a time stamp and preferably with additional positional and/or directional information.

14. A method according to one of claims 11 to 13 wherein the method further comprises the steps:
averaging over a plurality of mean gas concentrations determined in one spatial direction or in different spatial directions and/or with different spatial distances (17).

15. Use of a method according to one of claims 11 to 14 for the detection of a leak in a surface of an object (10), wherein the object (10) is an element for guiding the target gas (2), comprising the steps:
orienting the excitation laser beam (5) and the distance measuring beam (12) on to an intact surface region of the object (10),
determining a background concentration of the target gas (2) between the radiation point (13) and the intact surface region of the object (10),
orienting the excitation laser beam (5) and the distance measuring beam (12) on to the leak or on to a surface region of the object (10) in an area surrounding the leak,
determining the mean gas concentration of the target gas (2) between the radiation point (13) and the leak or the surface region of the object (10) in the area around the leak, and
determining the mean gas concentration of the target gas (2) in a region near the leak by subtraction of the mean background concentration of the target gas (2) from the mean gas concentration of the target gas (2) between the radiation point (13) and the object (10) when gas issues from the leak in the object (10).

## Revendications

1. Dispositif (1) pour la détection à distance d'un gaz cible (2), comprenant un dispositif d'éclairage (3) avec un laser (4), le laser (4) étant agencé de façon que le laser (4) émette, lors d'un fonctionnement du dispositif (1), un rayon laser d'excitation monomodal (5) ayant une longueur d'onde,
un dispositif de modulation (6),
un dispositif de détection (7) avec un premier détecteur (8), lequel dispositif étant agencé de façon telle que, lors du fonctionnement du dispositif (1), le rayon laser d'excitation (5) soit détecté par le dispositif de détection (7), et
un dispositif d'exploitation (9),
le dispositif de modulation (6) et le laser (4) étant agencés et disposés de façon telle que, lors du fonctionnement du dispositif (1), la longueur d'onde du rayon laser d'excitation (5) soit modulée avec une première fréquence de modulation,
le dispositif d'éclairage (3) et le dispositif de détection (7) étant disposés de façon telle que, lors du fonctionnement du dispositif (1), le rayon laser d'excitation (5) puisse être émis, à partir d'un point d'émission (13), vers un objet (10) et que le rayon laser d'excitation (11) réfléchi et/ou dispersé par l'objet (10) puisse être détecté par le dispositif de détection (7),
le dispositif de détection (7) et le dispositif d'exploitation (9) étant reliés l'un à l'autre par effet de façon telle que, lors du fonctionnement du dispositif (1), un signal représentant le rayon laser d'excitation (11) détecté soit transféré du dispositif de détection (7) au dispositif d'exploitation (9), et
le dispositif d'exploitation (9) étant agencé de façon telle que, lors du fonctionnement du dispositif (1), le dispositif d'exploitation (9) exploite le signal transféré du dispositif de détection (7), la densité de colonne moyenne (18) du gaz cible (2) dans un volume traversé par le rayon laser d'excitation (5, 11) étant déterminée à partir de l'atténuation du rayon laser d'excitation (5, 11),
le dispositif d'éclairage (3) étant agencé et disposé de façon telle que, lors du fonctionnement du dispositif (1), le dispositif d'éclairage (3) émette un rayon de mesure de distance (12) ayant un longueur d'onde, le laser (4) contribuant à la génération du rayon de mesure de distance (12),
le dispositif d'éclairage (3) étant agencé et disposé de façon telle que, lors du fonctionnement du dispositif (1), le rayon de mesure de distance (12) puisse être émis sur le même chemin optique du point d'émission (13) vers l'objet (10) que le rayon laser d'excitation (5),
le dispositif de modulation (6) et le dispositif d'éclairage (3) étant agencés de façon telle que, lors du fonctionnement du dispositif (1), l'amplitude ou la longueur d'onde du rayon de mesure de distance (12) soit modulée avec une deuxième fréquence de modulation, la deuxième fréquence de modulation étant différente de la première fréquence de modulation,
le dispositif de modulation (6) étant relié par effet au dispositif d'exploitation (9) de façon telle que, lors du fonctionnement du dispositif (1), un signal soit transféré du dispositif de modulation (6) au dispositif d'exploitation (9), le signal représentant la fréquence de modulation,
le dispositif de détection (7) étant agencé et disposé de façon telle que, lors du fonctionnement du dispositif (1), le rayon de mesure de distance (24) réfléchi et/ou dispersé par l'objet (10) puisse être détecté par le dispositif de détection (7),
le dispositif de détection (7) étant relié par effet au dispositif d'exploitation (9) de façon telle que, lors du fonctionnement du dispositif (1), un signal représentant le rayon de mesure de distance (24) détecté soit transféré au dispositif d'exploitation (9), et le dispositif d'exploitation (9) étant agencé de façon telle que, lors du fonctionnement du dispositif (1), le dispositif d'exploitation (9) détermine, à partir du signal transféré, la distance (17) dans l'espace entre le point d'émission (13) et l'objet (10), la distance (17) dans l'espace étant déterminée à l'aide d'une mesure de phase ou d'une mesure de distance FMCW, et que, à partir de la densité de colonne moyenne (18) du gaz cible et de la distance (17) dans l'espace, la concentration de gaz moyenne du gaz cible (2) soit déterminée.

2. Dispositif (1) selon la revendication 1, le rayon de mesure de distance (12) étant émis par le laser (4), si bien que la longueur d'onde du rayon laser d'excitation (5) et la longueur d'onde du rayon de mesure de distance (12) soient égales, et le dispositif de modulation (6) étant relié par effet au laser (4) de façon telle que l'amplitude ou la longueur d'onde du rayon de mesure de distance (12) soit modulée avec la deuxième fréquence de modulation.

3. Dispositif (1) selon l'une des revendications précédentes, le dispositif d'exploitation (9) comprenant un filtre actif (14), le filtre actif (14) divisant le signal transféré par le dispositif de détection (7) en un premier signal modulé avec la première fréquence de modulation et un deuxième signal modulé avec la deuxième fréquence de modulation, si bien que, après passage par le filtre actif (14), la densité de colonne (18) soit déterminée sur la base du premier signal et la distance (17) dans l'espace soit déterminée sur la base du deuxième signal.

4. Dispositif (1) selon l'une des revendications précédentes, le dispositif d'éclairage (3) comprenant une source lumineuse pilote (15) qui est agencée de façon telle que, lors du fonctionnement du dispositif (1), la source lumineuse pilote (15) émette un rayon lumineux pilote (23) ayant une longueur d'onde dans le domaine visible, de préférence dans la plage des longueurs d'onde vertes, le dispositif d'éclairage (3) étant agencé de façon telle que, par le rayon lumineux pilote (23), sur l'objet (10), un point puisse être marqué auquel le rayon laser d'excitation (5) et le rayon de mesure de distance (12) sont réfléchis et/ou dispersés.

5. Dispositif (1) selon la revendication 4, le dispositif d'éclairage (3) comprenant un cristal optique non linéaire (21) et une source de rayonnement de pompage (22), la source de rayonnement de pompage (22) émettant, lors du fonctionnement du dispositif (1), un rayonnement de pompage électromagnétique avec une amplitude et une longueur d'onde, le dispositif d'éclairage (3) étant agencé de façon telle que, lors du fonctionnement du dispositif (1), le rayon laser d'excitation (5), le rayon de mesure de distance (12) et le rayonnement de pompage engendrent le rayon lumineux pilote (23) dans le cristal optique non linéaire (21), si bien que le rayon lumineux pilote (23), le rayon laser d'excitation (5) et le rayon de mesure de distance (12) puissent être émis, vers l'objet (10), sur le même chemin optique.

6. Dispositif (1) selon la revendication 5, dans la mesure où elle ne dépend pas de la revendication 2, la source de rayonnement de pompage (22) étant relié par effet au dispositif de modulation (6) d'une façon telle que, lors du fonctionnement du dispositif (1), l'amplitude ou la longueur d'onde du rayonnement de pompage soit modulée avec la deuxième fréquence de modulation, le rayon lumineux pilote (23) formant le rayon de mesure de distance (12) et la longueur d'onde du rayon de mesure de distance (12) étant égale à la longueur d'onde du rayon lumineux pilote (23).

7. Dispositif (1) selon l'une des revendications 4 à 6, le dispositif de détection (7) comprenant un filtre (16), le filtre (16) étant agencé de façon telle que, lors du fonctionnement du dispositif (1), le filtre (16) laisse passer le rayon laser d'excitation (11) réfléchi et/ou dispersé par l'objet (10) et le rayon de mesure de distance (24) réfléchi et/ou dispersé par l'objet (10) vers le détecteur (8) et qu'il extraie le rayon lumineux pilote (23).

8. Dispositif (1) selon la revendication 7, le dispositif de détection (7) comprenant un premier détecteur (8) et un deuxième détecteur (19) ainsi qu'un séparateur optique de faisceau (20), le séparateur optique de faisceau (20) étant agencé de façon telle que, lors du fonctionnement du dispositif (1), le séparateur optique de faisceau (20) dirige le rayon laser d'excitation (11) réfléchi et/ou dispersé par l'objet (10) vers le premier détecteur et dirige le rayon de mesure de distance (24) réfléchi et/ou dispersé par l'objet (10) vers le deuxième détecteur (19).

9. Dispositif (1) selon l'une des revendications précédentes, dans lequel la première fréquence de modulation est inférieure à la deuxième fréquence de modulation, de préférence, la première fréquence de modulation étant au maximum 1 kHz et/ou la deuxième fréquence de modulation étant dans une plage de 100 kHz à 10 GHz, de préférence dans une plage de 1 MHz à 5 MHz.

10. Dispositif (1) selon l'une des revendications précédentes, dans lequel la longueur d'onde du rayon laser d'excitation (5) est modulée avec une troisième fréquence de modulation, notamment avec une troisième fréquence de modulation dans la plage de 10 kHz à 100 kHz.

11. Procédé pour la détection à distance d'un gaz cible (2) avec les étapes :
engendrer, avec un laser (4), un rayon laser d'excitation (5) monomodal ayant une longueur d'onde,
moduler la longueur d'onde du rayon laser d'excitation (5) avec une première fréquence de modulation,
illuminer un objet (10) avec le rayon laser d'excitation (5), le rayon laser d'excitation (5) passant sur un chemin d'un point d'émission (13) vers l'objet (10),
détecter le rayon laser d'excitation (11) réfléchi et/ou dispersé par l'objet (10),
déterminer la densité de colonne moyenne (18) du gaz cible (2) dans un volume traversé par le rayon laser d'excitation (5, 11), à partir de l'atténuation du rayon
laser d'excitation (5, 11) réfléchi et/ou dispersé par l'objet (10),
le procédé comprenant en outre les étapes
engendrer, avec le laser (4), un rayon de mesure de distance (12) avec une longueur d'onde,
moduler l'amplitude ou la longueur d'onde du rayon de mesure de distance (12) avec une deuxième fréquence de modulation, la deuxième fréquence de modulation étant différente de la première fréquence de modulation,
illuminer l'objet (10) avec le rayon de mesure de distance (12) modulé, le rayon de mesure de distance (12) étant guidé sur le même chemin optique que le rayon laser d'excitation (5), du point d'émission (13) vers l'objet (10),
détecter le rayon de mesure de distance (24) réfléchi et/ou dispersé par l'objet (10),
déterminer la distance (17) dans l'espace entre le point d'émission (13) et l'objet (10) par exploitation du rayon de mesure de distance (24), la détermination de la distance (17) dans l'espace étant effectuée à l'aide d'une mesure de phase ou d'une mesure de distance FMCW, et
déterminer la concentration de gaz moyenne du gaz cible (2) à partir de la densité de colonne (18) moyenne du gaz cible (2) et la distance (17) dans l'espace entre le point d'émission (13) et l'objet (10).

12. Procédé selon la revendication 11, le procédé comprenant en outre l'étape d'indication d'un signal lorsque la concentration de gaz moyenne déterminée du gaz cible (2) dépasse une valeur seuil prédéterminée.

13. Procédé selon la revendication 11 ou 12, le procédé comprenant en outre les étapes de détermination répétée et espacée dans le temps de la concentration de gaz moyenne du gaz cible (2) et d'enregistrement d'une pluralité de concentrations de gaz moyennes pourvues d'un horodatage et, de préférence, d'une information supplémentaire de position et/ou de direction.

14. Procédé selon l'une des revendications 11 à 13, le procédé comprenant en outre l'étape de faire la moyenne de concentrations de gaz moyennes déterminées dans une direction dans l'espace ou dans différentes directions dans l'espace et/ou avec différentes distances (17) dans l'espace.

15. Utilisation d'un procédé selon l'une des revendications 11 à 14 pour la détection d'une fuite dans une surface de l'objet (10), l'objet (10) étant un élément pour le guidage du gaz cible (2), avec les étapes
orienter le rayon laser d'excitation (5) et le rayon de mesure de distance (12) vers une zone intacte de surface de l'objet (10),
déterminer une concentration en arrière-plan du gaz cible (2) entre le point d'émission (13) et la zone intacte de surface de l'objet (10),
orienter le rayon laser d'excitation (5) et le rayon de mesure de distance (12) vers la fuite ou vers une zone de surface de l'objet (10) aux alentours de la fuite,
déterminer la concentration de gaz moyenne du gaz cible (2) entre le point d'émission (13) et la fuite ou la zone de surface de l'objet (10) aux alentours de la fuite, et
déterminer la concentration de gaz moyenne du gaz cible (2) dans une zone proche de la fuite par soustraction de la concentration moyenne en arrière-plan du gaz cible (2) de la concentration de gaz moyenne du gaz cible (2) entre le point d'émission (13) et l'objet (10) lors d'une sortie de gaz de la fuite dans l'objet (10).
